(19)

**Europäisches Patentamt**
**European Patent Office**
**Office européen des brevets**

(11) **EP 3 062 451 B1**

(12) **EUROPEAN PATENT SPECIFICATION**

(45) Date of publication and mention
of the grant of the patent:
**27.06.2018  Bulletin 2018/26**

(51) Int Cl.:
**H04B 7/185** (2006.01)

(21) Application number: **15156456.4**

(22) Date of filing: **25.02.2015**

(54) **Integrated satellite-terrestrial network using a multibeam satellite in which a satellite beam using spare resources is directed toward an earth surface covered by a beam in an abnormal situation.**

Integriertes Satelliten-Erdnetz mit einem Satelliten mit einer mehrstrahl Antenne in dem ein Sparmittel benutzender Satellitenstrahl umgeleitet wird auf eine Erdoberfläche bedeckt mit einem Strahl in einer unüblichen Lage.

Réseau intégré satellite-terrestre utilisant un satellite à pinceaux d'antenne multiple dans lequel un pinceau du satellite utilisant des ressources de rechange est dirigé vers une surface terrestre couverte par un pinceau dans un état anormal.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.08.2016  Bulletin 2016/35**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Ciochina-Duchesne, Cristina**
**35708 Rennes Cedex 7 (FR)**
• **Brunel, Loïc**
**35708 Rennes Cedex 7 (FR)**

(74) Representative: **Cabinet Le Guen Maillet**
**3, impasse de la Vigie**
**CS 71840**
**35418 Saint-Malo Cedex (FR)**

(56) References cited:
**EP-A2- 2 073 401        GB-A- 2 354 673**
**US-A- 5 790 070        US-A1- 2002 090 942**
**US-A1- 2013 045 675**

**Description**

The present invention relates generally to a method and a device for re-allocating resources in an integrated satellite-terrestrial network if an abnormal situation occurs in an area covered by the integrated satellite-terrestrial network.

An integrated satellite-terrestrial network is a network comprising a satellite component and a terrestrial component, the two components being controlled by the same resource and network management system. The terrestrial component of the integrated satellite-terrestrial network is usually called Complementary Ground Component.

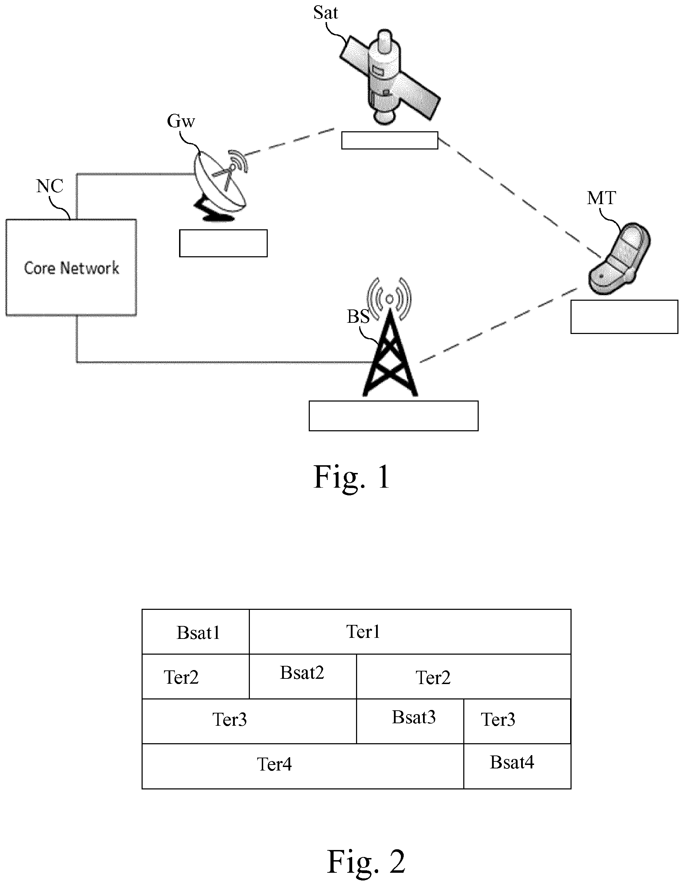

An example of integrated satellite-terrestrial network is disclosed in Fig. 1.

**Fig. 1** represents an example of an integrated satellite-terrestrial network.

The network management unit or core network CN controls both the terrestrial and the satellite components.

A first component is a satellite network composed of at least one gateway Gw which communicates with at least one satellite Sat which enables mobile terminals MT to establish a communication with a remote telecommunication device not shown in Fig. 1.

A second component is a terrestrial cellular telecommunication network composed of a plurality of base stations which enable mobile terminals MT to establish a communication with a remote telecommunication device not shown in Fig. 1.

The two components may use the same resources. Resources consist in portions of frequency bands, and/or possibly different polarizations.

In a given set of resources allocated for the integrated system, resources can be shared in different manners between the two components like for example by means of frequency division or frequency sharing.

In frequency division, terrestrial and satellite components use different frequency bands. There is no in-band interference between the two components, but some out-of-band interference due to leakage exists.

Resources allocated to the satellite component can further be considered as split, by frequency and/or polarization, into several sub-portions, usually called colors, that can be used with a certain reuse factor by the set of beams generated by the satellite Sat in order to allow a multi-beam deployment at the terrestrial surface. Let us denote by $N_{colors}$ the number of colors used by the satellite component.

Overall system capacity is limited by the fact that the two components cannot reuse the same resources.

An example of resource planning by frequency sharing is given in Fig. 2.

**Fig. 2** discloses an example of resource planning by frequency sharing between the satellite component and the terrestrial component of the integrated satellite-terrestrial network.

The horizontal axis shows the resources allocated to the integrated satellite-terrestrial network.

The vertical axis shows an example of resource use in different beams wherein the satellite component uses $N_{colors}=4$ different colors.

For the beams using the first color, the satellite component uses the resources noted Bsat1 and the terrestrial cellular component deployed in those beams uses the resources noted Ter1.

For the beams using the second color, the satellite component uses the resources noted Bsat2 and the terrestrial cellular component deployed in those beams uses the resources noted Ter2.

For the beams using the third color, the satellite component uses the resources noted Bsat3 and the terrestrial cellular component deployed in those beams uses the resources noted Ter3.

For the beams using the fourth color, the satellite component uses the resource noted Bsat4 and the terrestrial cellular component deployed in those beams uses the resources noted Ter4.

In frequency sharing, the two components may thus use the same sets of resources.

In each satellite beam, the terrestrial cellular component uses all the resources, like frequency and/or possibly polarization unused by the satellite component in that beam.

Inter-component interference is higher than in the frequency division configuration. The system does not only experience out-of-band interference due to leakage but also in-band interference especially for mobile terminals, called also users, at beam edges, like, for example, between mobile terminals using the satellite resource in a beam and the mobile terminals using terrestrial cellular component using the same resource but situated in a neighboring beam.

Frequency sharing offers higher available system bandwidth/spectral efficiency due to better spectrum utilization, but may need some terrestrial/satellite interference mitigation/cancelling.

Different interference patterns exist, depending on how uplink and downlink signals are mapped on resources for the satellite component and the terrestrial cellular component.

Mobile terminals are served by default by the terrestrial cellular component of the integrated satellite-terrestrial network. The terrestrial cellular component can be implemented like a classical terrestrial wireless communications network, e.g. a LTE (Long Term Evolution) or LTE-Advanced network.

Mobile terminals MT have dual mode capabilities and can be served by the satellite component when they are unable to reach the terrestrial cellular component (e.g. they are outside the terrestrial coverage, or the terrestrial cellular component is in failure due, for example, to a disaster situation, or the terrestrial cellular component is overloaded).

Satellites may also provide steerable beams.

In Fig. 2, only four beams using the $N_{colors}$=4 different colors are shown for the sake of simplicity, but a multibeam satellite usually has several tens/hundreds of beams reusing the predefined number $N_{colors}$ of colors.

If the terrestrial cellular component is a frequency reuse 1 network, i.e. a cellular telecommunication network where all the cells can use the same resources, the terrestrial cellular component uses in each of the cells the resources unused by the satellite beam in which the cell is geographically located.

In normal operating mode, the traffic load is split between the terrestrial cellular component and the satellite component, each one dimensioned to cope with a predefined traffic profile.

If a disaster occurs, the terrestrial cellular component in the disaster region may become either overloaded in terms of simultaneously connected mobile terminals or provided total throughput, or non-operational. Such situation is considered as an abnormal situation.

A massive demand of satellite access may occur from mobile terminals in the disaster region. For example, an important number of mobile terminals may want to communicate simultaneously, an arrival of emergency services with high communication needs may occur, etc... Such situation is considered as an abnormal situation.

This massive demand may lead to satellite component capacity outage. Depending on the location of the disaster region (for example the disaster region is close to a beam border), increased interference levels may also impact the functioning of the terrestrial cells in the neighboring beams using the same resource as the satellite users in the disaster region. Such situation is considered as an abnormal situation.

The patent application US 2002/090942 discloses a cellular communications system comprising a space based system comprising at least one satellite.

The patent application GB 2 354 673 discloses a system for dynamic beam fill-in in a cellular communications network having a constellation of satellites in orbit above a surface of the Earth.

The present invention aims at providing a method and a device which enable a specific resource planning and a protocol to be followed by the integrated satellite-terrestrial network in case of abnormal situation occurrence in order to avoid capacity outage in the region wherein the abnormal situation occurs.

To that end, the present invention concerns a method for re-allocating resources in an integrated satellite-terrestrial network if an abnormal situation occurs in an area covered by the integrated satellite-terrestrial network, the integrated satellite-terrestrial network comprising a terrestrial cellular component composed of cells, a satellite component and a network controller communicating with both the terrestrial and the satellite components, the resources allocated to the satellite component being split into several sub-portions of resources used by a set of beams generated by a satellite of the satellite component for a multi-beam transmission at the terrestrial surface, wherein in each beam using one sub-portion of resources, the cells in said beam use different resources from the sub-portion of resources used by said beam, characterized in that the resources of the integrated satellite-terrestrial network are further comprising resources that may be re-allocated when an abnormal situation occurs in the area covered by the integrated satellite-terrestrial network and in that the method comprises the steps of:

- monitoring reports in the integrated satellite-terrestrial network,
- checking if an abnormal situation occurs according to the content of reports and if an abnormal situation occurs:
- identifying a region wherein the abnormal situation occurs,
- computing a center of a steerable beam situated in the identified region,
- transferring to the satellite component a command in order to apply the steerable beam pointing towards the computed center, the steerable beam using at most all the resources that may be re-allocated,
- transferring to the component of the integrated satellite-terrestrial network which was using, before the abnormal situation occurs, the at most all resources that may be re-allocated a command to stop using the at most all resources that may be re-allocated at least in the area covered by the steerable beam.

The present invention also concerns a device for re-allocating resources in an integrated satellite-terrestrial network if an abnormal situation occurs in an area covered by the integrated satellite-terrestrial network, the integrated satellite-terrestrial network comprising a terrestrial cellular component composed of cells, a satellite component and a network controller communicating with both the terrestrial and the satellite components, the resources allocated to the satellite component being split into several sub-portions of resources used by a set of beams generated by a satellite of the satellite component for a multi-beam transmission at the terrestrial surface, wherein in each beam using one sub-portion of resources, the cells in said beam use different resources from the sub-portion of resources used by said beam, characterized in that the resources of the integrated satellite-terrestrial network are further comprising resources that may be re-allocated when an abnormal situation occurs in the area covered by the integrated satellite-terrestrial network and in that the device comprises:

- means for monitoring reports in the integrated satellite-terrestrial network,

- means for checking if an abnormal situation occurs according to the content of reports,
- means for, if the abnormal situation occurs, identifying a region wherein the abnormal situation occurs,
- means for, if the abnormal situation occurs, computing a center of a steerable beam situated in the identified region,
- means for, if the abnormal situation occurs, transferring to the satellite component a command in order to apply the steerable beam pointing towards the computed center, the steerable beam using at most all the resources that may be re-allocated,
- means for, if the abnormal situation occurs, transferring to the component of the integrated satellite-terrestrial network which was using, before the abnormal situation occurs, the at most all resources that may be re-allocated a command to stop using the at most all resources that may be re-allocated at least in the area covered by the steerable beam.

Thus, the integrated satellite-terrestrial network is able to continue functioning in the case when an abnormal situation occurs.

According to a particular feature, the component of the integrated satellite-terrestrial network which was using the at most all resources that may be re-allocated is the terrestrial cellular component.

Thus, in normal functioning mode the capacity of the terrestrial cellular component is optimized.

According to a particular feature, the terrestrial cellular component was using the at most all resources that may be re-allocated for user data communication only.

Thus, in case of resource re-allocation, no system or control information is lost.

According to a particular feature, the method comprises further step of computing a size of the steerable beam.

Thus, the size of the steerable beam is adapted to the size of the region affected by the abnormal situation.

According to a particular feature, the method comprises further step executed prior to the transfer of the commands of:

- checking, for a variable range of resources that may be re-allocated, whether in case of a steerable beam deployment the satellite component capacity gain is superior to the terrestrial cellular component capacity loss in at least the area covered by the steerable beam.

Thus, a steerable beam is deployed only when it brings significant performance improvement.

According to a particular feature, the checking for the variable range of resources is further performed for a plurality of possible centers of the steerable beam situated in the identified region.

Thus, the steerable beam is able to serve the region the most affected by the abnormal situation.

According to a particular feature, each cell further uses resources different from the resources allocated to the satellite component and from the resources that may be re-allocated.

Thus, interference of the satellite component on the terrestrial cellular component is limited.

According to a particular feature, the command to stop using the at most all resources that may be re-allocated at least in the area covered by the steerable beam is a command to stop using the at most all resources that may be re-allocated at least in the area covered by the steerable beam and in a restricted area.

Thus, interference between the steerable beam and the neighboring terrestrial cellular component outside the steerable beam is limited.

According to a particular feature, the checking if an abnormal situation occurs according to the content of reports is performed by checking if an increased traffic demand on the terrestrial cellular component occurs in a geographical region and/or by checking if an increased traffic demand on the satellite component occurs in the geographical region and/or by checking if cells of a geographical region fail to provide reports and/or by checking if interference level increases on cells surrounding the geographical region.

Thus, abnormal situations leading to network saturation can be identified.

According to a particular feature, the method is executed by the network controller communicating with both the terrestrial and the satellite components.

Thus, the satellite and the terrestrial cellular components cooperate to optimize the integrated satellite-terrestrial network performance.

According to a particular feature, the center of the steerable beam is computed as:

$$c_{beam} = \left( \sum_{i=1}^{N_d} c_i f(u_i) \right) / \sum_{i=1}^{N_d} f(u_i) .$$

Where $c_i$, $i=1...N_d$ are complex coordinates of the cells situated in the identified region having each $u_i$ attached mobile terminals, $N_d$ is the number of the cells situated in the identified region, and the function $f(u_i)=1$ or $f(u_i)=u_i$.

Thus the number of mobile terminals served by the steerable beam is maximized. According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents an example of an integrated satellite-terrestrial network;

Fig. 2 discloses an example of resource planning by frequency sharing between the satellite component and the terrestrial component of the integrated satellite-terrestrial network;

Fig. 3 is a diagram representing the architecture of a network controller capable of communicating with both the terrestrial and the satellite components of the integrated -satellite-terrestrial network in which the present invention is implemented;

Fig. 4 represents an example of resource sharing between the satellite component and the terrestrial component of an integrated satellite-terrestrial network according to the present invention;

Fig. 5 represents an algorithm executed for re-allocating resources when an abnormal situation occurs in an area covered by an integrated satellite-terrestrial network according to the present invention.

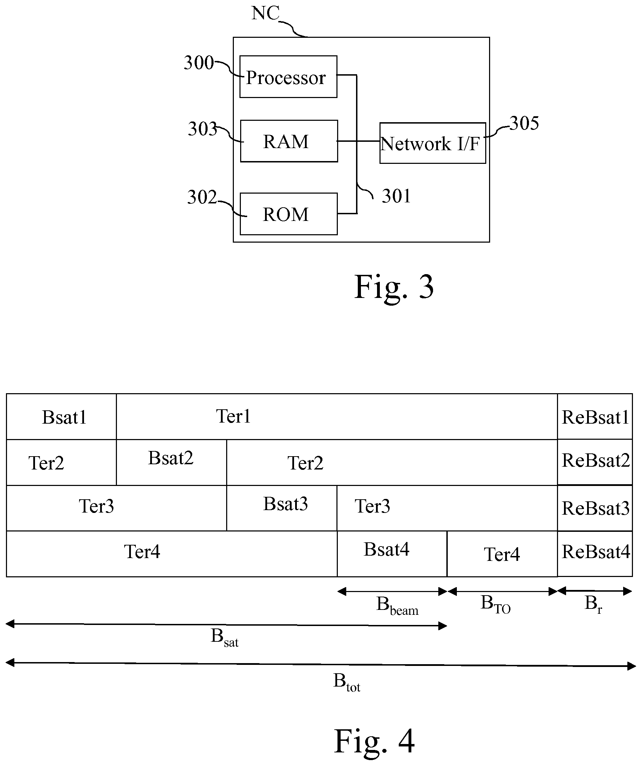

**Fig. 3** is a diagram representing the architecture of a network controller capable of communicating with both the terrestrial and the satellite component of the integrated satellite-terrestrial network in which the present invention is implemented.

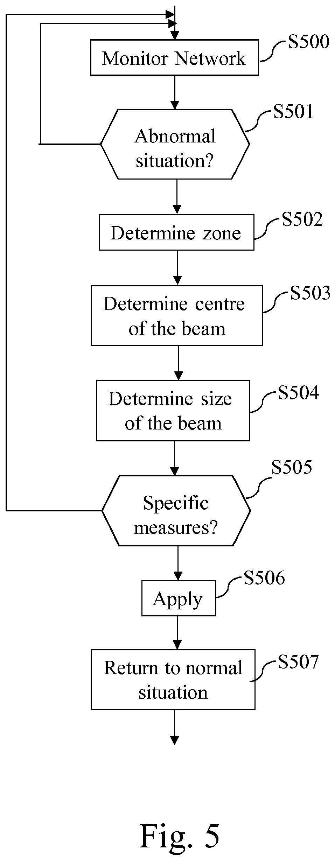

The network controller NC has, for example, an architecture based on components connected together by a bus 301 and a processor 300 controlled by the program as disclosed in Fig. 5.

It has to be noted here that network controller NC may have an architecture based on dedicated integrated circuits.

The bus 301 links the processor 300 to a read only memory ROM 302, a random access memory RAM 303 and a network interface 205.

The memory 303 contains registers intended to receive variables and the instructions of the programs related to the algorithm as disclosed in Fig. 5.

The processor 300 controls the operation of the wireless interface 305.

The read only memory 302 contains instructions of the program related to the algorithm as disclosed in Fig. 5, which are transferred, when the network controller NC is powered on, to the random access memory 303.

Any and all steps of the algorithm described hereafter with regard to Fig. 5 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the network controller NC includes circuitry, or a device including circuitry, causing the network controller NC to perform the steps of the algorithm described hereafter with regard to Fig. 5.

According to the invention, the network controller re-allocates resources in the integrated satellite-terrestrial network if an abnormal situation occurs in the area covered by the integrated satellite-terrestrial network, the resources allocated to the satellite component are split into several sub-portions of resources used by a set of beams generated by the satellite for a multi-beam transmission at the terrestrial surface. Each beam uses one sub-portion of resources, the cells in said beam use different resources from the sub-portion of resources used by said beam. The resources of the integrated satellite-terrestrial network are further comprising resources that may be re-allocated when an abnormal situation occurs in the area covered by the integrated satellite-terrestrial network. The network controller:

- monitors reports in the integrated satellite-terrestrial network,
- checks if an abnormal situation occurs according to the content of reports and if an abnormal situation occurs:
- identifies a region wherein the abnormal situation occurs,
- computes a center of a steerable beam situated in the identified region,
- transfers to the satellite component a command in order to apply the steerable beam pointing towards the computed center, the steerable beam using at most all the resources that may be re-allocated,
- transfers to the component of the integrated satellite-terrestrial network which was using, before the abnormal situation occurs, the at most all resources that may be re-allocated a command to stop using the at most all resources that may be re-allocated at least in the area covered by the steerable beam.

**Fig. 4** represents an example of resource sharing between the satellite component and the terrestrial component of an integrated satellite-terrestrial network according to the present invention.

The horizontal axis shows the resources allocated to the integrated satellite-terrestrial network.

It has to be noted here that resources represented as neighboring in Fig. 4 are not necessarily neighboring in the frequency domain.

The vertical axis shows an example of resource use in different beams. In this particular example, the satellite component uses four different colors. Obviously, a different number $N_{colors}$ of colors can be used by the satellite beam pattern.

For the beams using the first color, the satellite Sat uses the resources noted Bsat1. The terrestrial cellular component deployed in those beams uses the resources noted Ter1. Resources noted ReBsat1 are resources that may be re-allocated according to the present invention when an abnormal situation occurs. When no abnormal situation occurs, resources ReBsat1 can be used, for example, by the terrestrial cellular component deployed in the beams using the first color.

For the beams using the second color, the satellite Sat uses the resources noted Bsat2. The terrestrial cellular component deployed in those beams uses the resources noted Ter2. Resources noted ReBsat2 are resources that may be re-allocated according to the present invention when an abnormal situation occurs. When no abnormal situation occurs, resources ReBsat2 can be used, for example, by the terrestrial cellular component deployed in the beams using the second color.

For the beams using the third color, the satellite Sat uses the resources noted Bsat3. The terrestrial cellular component deployed in those beams uses the resources noted Ter3. Resources noted ReBsat3 are resources that may be re-allocated according to the present invention when an abnormal situation occurs. When no abnormal situation occurs, resources ReBsat3 can be used, for example, by the terrestrial cellular component deployed in the beams using the third color.

For the beams using the fourth color, the satellite Sat uses the resources noted Bsat4. The terrestrial cellular component deployed in those beams uses the resources noted Ter4. Resources noted ReBsat4 are resources that may be re-allocated according to the present invention when an abnormal situation occurs. When no abnormal situation occurs, resources ReBsat4 can be used, for example, by the terrestrial cellular component deployed in the beams using the fourth color.

The resources noted ReBsat1, ReBsat2, ReBsat3, ReBsat4 are resources ReBsat that may be re-allocated according to the present invention when an abnormal situation occurs.

According to the invention, when the network controller NC detects an abnormal situation like, for example, a disaster or a sudden important increase of the traffic in a specific region, the network controller NC identifies and localizes the region wherein the abnormal situation occurs and adapts the resource allocation according to the importance and the localization of the abnormal situation.

The network controller NC dynamically re-allocates part or all of resources that may be re-allocated in order to cope with the new situation and continue serving mobile terminals in the region wherein the abnormal situation occurs, thus avoiding capacity outage.

Dynamic resource re-allocation is made possible by in-advance specific planning of resources that may be re-allocated ReBsat and resource sharing between the terrestrial cellular telecommunication component and satellite component.

The present invention enables the implementation of local measures in the region wherein the abnormal situation occurs without large scale changes at global network level.

The present invention uses a new resource planning and sharing as described in Fig. 4.

The total amount of resources of the integrated satellite-terrestrial network is noted $B_{tot}$. This includes frequency and/or possibly polarization resources. The present invention proposes to define resources that may be re-allocated as being resources of an amount $B_r$, having a different utilization in function of the presence and/or of the importance of the region wherein the abnormal situation occurs, as it will be described in the following. $B_r > 0$.

Satellite beams may use $N_{colors}$ different colors for their resource reuse pattern. The total amount of resources used by the satellite component for its fixed footprint coverage in normal operating mode is $B_{sat} = \displaystyle\sum_{i=1}^{N_{colors}} B_{beam_i}$ where $B_{beam_i}$ is the amount of resources used by the beams having the i-th color. Usually, beams have the same bandwidth and thus $B_{sat} = N_{colors}B_{beam}$. Obviously, $B_{sat} \leq B_{tot} - B_r$.

The present invention further defines as terrestrial cellular component only the resources $B_{TO}$ used only by the terrestrial cellular component and without any resource sharing with the satellite component. $B_{TO} = B_{tot} - B_r - B_{sat} \geq 0$.

When $B_{TO} > 0$, resources $B_{TO}$ do not experience interference from the satellite component regardless of the terrestrial cell location and even for cells situated at beam border. Interference comes only from the neighboring terrestrial cells and is managed within the terrestrial cellular component for example by employing Inter-Cell Interference Coordination or Coordinated Multi-Point methods. Thus, the existence of $B_{TO}$>0 results in reduced inter-component interference suffered by the terrestrial cellular component in those terrestrial cells located at beam borders.

It has to be noted that $B_{TO}$>0 reduces the effective range of resources of the satellite component $B_{sat}$ and thus the satellite component capacity, without any other benefits for the satellite component. For example, the existence or the size of $B_{TO}$ is decided in the early stages of the integrated satellite-terrestrial network design, based on interference profiles, expected satellite traffic in full load and a tradeoff between terrestrial cellular component performance and satellite component capacity.

Resources that may be re-allocated ReBsat of a total amount $B_r$ have a certain use during normal operating mode and are totally or partially re-allocated in a certain geographical region in case of an abnormal situation.

For example, in normal operating mode, resources that may be re-allocated ReBsat are freely used by the terrestrial component. Since these resources are likely to be dynamically re-allocated in case of disaster occurrence, the terrestrial cellular component must refrain from using $B_r$ for transferring any system or control information both in uplink and in downlink and use it, for example, for user data communication only.

For instance, if the terrestrial cellular component uses LTE-Advanced, carrier aggregation may be used and one of the carriers can span $B_r$ and never carry Layer 1 control signaling (PDCCH).

In a variant, in normal operating mode, resources that may be re-allocated ReBsat are allocated to a steerable satellite beam directed towards hot spot zones with high traffic demands.

For example, in case of detecting an abnormal situation, the network controller NC, after having identified the existence, localization and extent of the abnormal situation, decides to allocate part or all of the resources that may be re-allocated ReBsat to serve the region wherein the abnormal situation occurs, where the terrestrial cellular telecommunication component failed or is overloaded. The same applies for abnormal situations like a disaster, an important sport event or else.

For example, a steerable satellite beam using an amount $B_{r\_effective} \le B_r$ of resources that may be re-allocated ReBsat is deployed over the region wherein the abnormal situation occurs. To limit out-of-band interference with normal satellite service, $B_r$ may be chosen to be spectrally "far" from other resources used by the satellite component. It has to be noted here that the resources that may be re-allocated ReBsat may be used in other manners by the integrated satellite-terrestrial network when no emergency situation is detected.

In case of activation of a steerable beam deployed over a region wherein the abnormal situation occurs, the network controller NC defines a terrestrial restricted area, comprising at least the coverage of the steerable beam plus possibly an exclusion area around this coverage, within which the terrestrial cells that remained active are forbidden to use resources $B_{r\_effective}$. Resources $B_{r\_effective}$ can continue being freely used by the terrestrial cellular component outside the terrestrial restricted area.

The amount $B_r$ of resources that may be re-allocated ReBsat must be large enough to ensure that the traffic generated by typical disaster situations may be handled by the integrated satellite-terrestrial network without capacity outage.

On the other hand, using an important amount of resources $B_r$ reduces the effective resource range of satellite services $B_{sat}$ and thus the satellite component capacity, without any other benefits for the satellite component in normal operating mode. In the early stages of the integrated satellite-terrestrial network design, the amount of resources $B_r$ is determined based on the estimated traffic load in emergency situations the integrated satellite-terrestrial network is designed to cope with, and on a trade-off between the amount of extra-capacity that can be dynamically re-allocated in case of emergency and the satellite component capacity in normal operating mode.

**Fig. 5** represents an algorithm executed for re-allocating resources when an abnormal situation occurs in an area covered by an integrated satellite-terrestrial network according to the present invention.

More precisely, the present algorithm is executed by the processor 300 of the network controller CN.

At step S500, the processor 300 monitors the integrated satellite-terrestrial network.

The processor 300 has knowledge of the geographical location of each cell/beam and is able to identify sudden changes in the integrated satellite-terrestrial network behavior occurring in neighboring geographical areas.

In normal operating mode, the processor 300 receives periodic information from both the terrestrial and the satellite components. This information should include reports on the number of connected mobile terminals and the approximate number of idle mobile terminals in each cell of the terrestrial cellular component and in each beam of the satellite component.

An idle mobile terminal is a mobile terminal MT which is turned on but is not connected. The terrestrial component usually has knowledge of the idle mobile terminal raw localization within a tracking area formed by a group of cells. Statistically, a number of turned-off mobile terminals that can potentially be turned on and demand access in a disaster situation is monitored. A connected mobile terminal is a mobile terminal in communication for data and/or voice with a base station.

At next step S501, the processor 300 checks if an abnormal situation occurs, according to the content of reports.

If a disaster is affecting the terrestrial surface without causing major failure of the terrestrial cellular component, an increased traffic demand on the terrestrial cellular component occurs, which may become saturated, for example by idle mobile terminals which try to establish a communication.

Some of the mobile terminals not being able to connect to the terrestrial cellular component may try and connect to the satellite component, which may experience increased traffic demand.

If a disaster is affecting a geographical region, the terrestrial cellular network saturation occurs in cells in the geographical region or some cells may also fail to provide reports.

When a disaster occurs near a satellite beam border, increased uplink traffic with the satellite component localized at the satellite beam border causes increased interference level on the terrestrial cells geographically close to the region wherein the abnormal situation occurs and situated in neighboring beams. If interference level becomes important, some mobile terminals in these cells may try to switch to a communication with the satellite component.

If a major disaster like an important earthquake, a major inundation etc. occurs, the terrestrial cellular component may probably fail. Mobile terminals MT at terrestrial surface connected to the failing terrestrial cells suffer a massive radio link failure and try to access the satellite component. Idle/ turned-off mobile terminals may also try and establish communication.

If there is a major disaster in the following minutes/hours there will be an increase demand of traffic coming from specialized services like emergency units, police, medical intervention groups, media, etc.

The processor 300 may thus identify an abnormal situation when the network controller NC receives reports showing that several geographically close terrestrial cells are overloaded and/or few cells in the same region are failing and can thus identify an abnormal situation.

The processor 300 may thus identify an abnormal situation when an increased satellite traffic demand occurs in at least one beam where the abnormal situation occurs.

The processor 300 may thus identify an abnormal situation when an increased satellite traffic demand occurs in at least one beam neighboring a beam containing a region wherein the abnormal situation occurs.

The processor 300 may thus identify an abnormal situation when it receives reports showing that several geographically close terrestrial cells are failing and/or few cells in the same region are overloaded and can thus identify a region wherein the abnormal situation occurs.

If the current configuration of the satellite component is able to cope with the demand, the processor 300 returns to step S500.

If on the other hand traffic on the satellite component also approaches saturation, the processor 300 moves to step S502.

At step S502, the processor 300 identifies the region wherein the abnormal situation occurs and possibly an exclusion area around it.

The region wherein the abnormal situation occurs comprises the region wherein an increased traffic demand to the satellite component occurs.

The region wherein the abnormal situation occurs comprises the region wherein the terrestrial cellular component saturation occurs.

The region wherein the abnormal situation occurs comprises the region wherein terrestrial cells fail to provide reports, or provide reports indicating major radio link failure.

The region wherein the abnormal situation occurs comprises the region wherein interference level becomes important.

At next step S503, the processor 300 computes the center of the steerable beam.

The purpose is to concentrate a maximum number of potential mobile terminals MT benefiting from the deployment of a steerable beam as close as possible to the steerable beam center. The steerable beam center may be computed, for example, as a weighted center of the region wherein the abnormal situation occurs, where weighting is a function of the number of mobile terminals MT connected, idle or turned off attached to each cell in the region wherein the abnormal situation occurs.

For example, the network controller CN stores in memory the cell positions on a map in Cartesian coordinates represented as complex numbers representing the center of each cell.

Let us assume that $c_i$, $i=1...N_d$ are the complex coordinates of the cells identified as belonging to the region wherein the abnormal situation occurs, having each $u_i$ attached mobile terminal MT at the latest report corresponding to a normal operating situation.

The processor 300 computes the steerable beam center as, for example, $c_{beam} = \left( \sum_{i=1}^{N_d} c_i f(u_i) \right) / \sum_{i=1}^{N_d} f(u_i)$.

For example, the function $f(u_i)$ may have different forms, depending on the importance that one wants to give to the number of mobile terminals MT. For example $f(u_i)=1$ if only the location of the cells in the region wherein the abnormal situation occurs matters, or $f(u_i)=u_i$ if the number of mobile terminals MT needs to be taken into account, etc.

In another example, plural possible steerable beam centers can be assumed in a first phase, for example different points within the region wherein the abnormal situation occurs, on a predefined grid, or uniformly spread.

Of course, other type of representations like polar coordinates, etc and types of weighting can be used and thus the formulae here-above may change accordingly.

At next step S504, the processor 300 may determine the size of the steerable beam. In some satellite systems the beam size may be predetermined, without possibility of changing it.

If satellite system allows variable size steerable beam, several positions of the steerable beam are tested if plural centers have been identified at previous step. A beam size may be computed for each such position.

Assuming the total power allocated to the beam is limited, the footprint size determines the power density experienced by mobile terminals MT at the terrestrial surface. Distributing the power in a larger footprint allows larger coverage, but with lower link margin and thus potentially limited throughput for mobile terminals.

Inversely, high-power spot beams ensure good service quality in a more retrained geographical area. A predetermined number of steerable beam sizes may be tested for each beam center.

The steerable beam should cover most or all of the region wherein the abnormal situation occurs, and/or contain most of the mobile terminals in the region wherein the abnormal situation occurs. An optional extra exclusion region can be set around the footprint of the steerable beam, determining thus a terrestrial restricted region.

Other types of criteria may be taken into account to compute the position of the steerable beam. For example, if the region wherein the abnormal situation occurs is larger than the maximum footprint size of the steerable beam, a predefined number of different positions of the center of the steerable beam may be evaluated using predefined grid stored in memory in order to choose the most convenient direction e.g. serving the highest number of potential mobile terminals.

A next step S505, the processor 300 evaluates whether taking specific measures is susceptible of ameliorating the integrated satellite-terrestrial network or not.

Specific measures are, for example, deploying a steerable beam having a center and a size computed as described here-above and using an amount $B_{r\_effective}$ composed of all or part of the an amount $B_r$ of resources that may be re-allocated ReBsat, and forbidding the terrestrial cellular component in a terrestrial restricted region like for example composed of the footprint of the steerable beam and possibly an exclusion area around it to use those resources used by the steerable beam.

Such redeployment implies reducing the capacity of the terrestrial cellular telecommunication component in the terrestrial restricted region and increasing the capacity of the satellite component over the terrestrial restricted region, without any further changes to the global network resource planning.

The processor 300 may compute, for a variable range of resources ReBsat that are re-allocated from none to maximum $B_r$ whether the satellite component capacity gain in case of steerable beam deployment is superior to the terrestrial cellular component capacity loss in the terrestrial restricted region. If this is the case, the processor 300 moves to step S506 and decides that a steerable beam has to be deployed.

The processor 300 may determine, in case of major disaster, assuming that the terrestrial wireless cellular component is already mostly non-operant in the region wherein the abnormal situation occurs, that the steerable beam deployment is decided without any further capacity test. From the variable range of resources ReBsat, $B_{r\_effective}$ can be decided either in function of the estimated number of mobile terminal MT in the region wherein the abnormal situation occurs if the terrestrial cellular component is partly operational, possibly corrected by a factor depending on the size of the region wherein the abnormal situation occurs and taking into account of the foreseen arrival of emergency teams. In that case, the processor 300 decides that a steerable beam has to be deployed and moves to step S506.

Otherwise, the processor 300 returns to step S500.

At next step S506, the processor 300 commands the satellite component in order to apply the steerable beam pointing towards the computed center, having the computed size and using the amount of resources $B_{r\_effective}$ that are re-allocated. At the same step, the processor 300 informs terrestrial cells in the identified terrestrial restricted area to stop using the resources $B_{r\_effective}$

Terrestrial cells re-schedule their mobile terminals onto the remaining resources. Mobile terminals with no terrestrial link available monitor for satellite link availability. Outside the steerable beam footprint, mobile terminals connect to the satellite beam covering their region, as in normal mode.

Mobile terminals MT in the terrestrial restricted region without any terrestrial link connection automatically try and connect first to the steerable beam creating a hotspot over the terrestrial restricted region thus having a higher power than the classical beam.

The mobile terminals connected to the satellite component periodically monitor for the existence of a terrestrial link. When a terrestrial link becomes available, the mobile terminals MT proceed to a handover towards the terrestrial link.

A next step S507, the processor 300 monitors for network indicators showing the end of abnormal situation using reports from the terrestrial cells in the region wherein the abnormal situation occurs, or detects a manual command to come back to normal operating mode.

For example, the processor 300 decides the end of the abnormal situation depending on the number of cells in the region wherein the abnormal situation occurs sending normal operating reports with increasing number of mobile terminals.

For example, the processor 300 decides the end of the abnormal situation when the number of mobile terminals MT connected to the satellite component is durably decreasing.

Once the processor 300 determines the end of the abnormal situation, the processor 300 commands the satellite component to inform remaining mobile terminals MT which use the steerable beam to initiate handover towards the satellite component in normal operating mode.

The processor 300 commands the satellite component to turn off the steerable beam and informs terrestrial cells in the terrestrial restricted area that they can re-start using resources $B_{r\_effective}$ to serve their mobile terminals.

In another variant, the processor 300 may periodically return to step S500.

Naturally, many modifications can be made to the embodiments of the invention described above without departing from the scope of the present invention.

## Claims

1. Method for re-allocating resources in an integrated satellite-terrestrial network if an abnormal situation occurs in an area covered by the integrated satellite-terrestrial network, the integrated satellite-terrestrial network comprising a terrestrial cellular component composed of cells, a satellite component and a network controller communicating with both the terrestrial and the satellite components, the resources allocated to the satellite component being split into several sub-portions of resources used by a set of beams generated by a satellite of the satellite component for a multi-beam transmission at the terrestrial surface, wherein in each beam using one sub-portion of resources, the cells in said beam use different resources from the sub-portion of resources used by said beam, **characterized in that** the resources of the integrated satellite-terrestrial network are further comprising resources that may be re-allocated when an abnormal situation occurs in the area covered by the integrated satellite-terrestrial network and **in that** the method comprises the steps, executed by a network controller capable of communicating with both the terrestrial and the satellite components of the integrated -satellite-terrestrial network, of:

   - monitoring (S500) reports in the integrated satellite-terrestrial network,
   - checking (S501) if an abnormal situation occurs according to the content of reports by checking if an increased traffic demand on the terrestrial cellular component occurs in a geographical region and/or by checking if an increased traffic demand on the satellite component occurs in the geographical region and/or by checking if cells of a geographical region fail to provide reports and/or by checking if interference level increases on cells surrounding the geographical region and if an abnormal situation occurs:
   - identifying (S502) a region wherein the abnormal situation occurs,
   - computing (S503, S504) a center of a steerable beam situated in the identified region,
   - transferring (S506) to the satellite component a command in order to apply the steerable beam pointing towards the computed center, the steerable beam using at most all the resources that may be re-allocated,
   - transferring to the component of the integrated satellite-terrestrial network which was using, before the abnormal situation occurs, the at most all resources that may be re-allocated a command to stop using the at most all resources that may be re-allocated at least in the area covered by the steerable beam.

2. Method according to claim 1, **characterized in that** the component of the integrated satellite-terrestrial network which was using the at most all resources that may be re-allocated is the terrestrial cellular component.

3. Method according to claim 2, **characterized in that** the terrestrial cellular component was using the at most all resources that may be re-allocated for user data communication only.

4. Method according to any of the claims 1 to 3, **characterized in that** the method comprises further step of computing a size of the steerable beam.

5. Method according to any of the claims 2 to 4, **characterized in that** the method comprises further step executed prior to the transfer of the commands of:

   - checking, for a variable range of resources that may be re-allocated, whether in case of a steerable beam deployment the satellite component capacity gain is superior to the terrestrial cellular component capacity loss in at least the area covered by the steerable beam.

6. Method according to claim 5, **characterized in that** the checking for the variable range of resources is further performed for a plurality of possible centers of the steerable beam situated in the identified region.

7. Method according to any of the claims 1 to 6, **characterized in that** each cell further uses resources different from the resources allocated to the satellite component and from the resources that may be re-allocated.

8. Method according to any of the claims 1 to 7, **characterized in that** the command to stop using the at most all resources that may be re-allocated at least in the area covered by the steerable beam is a command to stop using the at most all resources that may be re-allocated at least in the area covered by the steerable beam and in a restricted area.

9. Method according to any of the claims 7 to 8, **characterized in that** the method is executed by the network controller communicating with both the terrestrial and the satellite components.

10. Method according to any of the claims 1 to 5, **characterized in that** the center of the steerable beam is computed as: $c_{beam} = \left( \sum_{i=1}^{N_d} c_i f(u_i) \right) / \sum_{i=1}^{N_d} f(u_i)$. Where $c_i$, $i=1...N_d$ are complex coordinates of the cells situated in the identified region having each $u_i$ attached mobile terminals, $N_d$ is the number of the cells situated in the identified region, and the function $f(u_i)=1$ or $f(u_i)=u_i$.

11. Device for re-allocating resources in an integrated satellite-terrestrial network if an abnormal situation occurs in an area covered by the integrated satellite-terrestrial network, the integrated satellite-terrestrial network comprising a terrestrial cellular component composed of cells, a satellite component and a network controller communicating with both the terrestrial and the satellite components, the resources allocated to the satellite component being split into several sub-portions of resources used by a set of beams generated by a satellite of the satellite component for a multi-beam transmission at the terrestrial surface, wherein in each beam using one sub-portion of resources, the cells in said beam use different resources from the sub-portion of resources used by said beam, **characterized in that** the resources of the integrated satellite-terrestrial network are further comprising resources that may be re-allocated when an abnormal situation occurs in the area covered by the integrated satellite-terrestrial network and **in that** the device is included in a network controller capable of communicating with both the terrestrial and the satellite components of the integrated -satellite-terrestrial network and comprises:

    - means for monitoring reports in the integrated satellite-terrestrial network,
    - means for checking if an abnormal situation occurs according to the content of reports by checking if an increased traffic demand on the terrestrial cellular component occurs in a geographical region and/or by checking if an increased traffic demand on the satellite component occurs in the geographical region and/or by checking if cells of a geographical region fail to provide reports and/or by checking if interference level increases on cells surrounding the geographical region,
    - means for, if the abnormal situation occurs, identifying a region wherein the abnormal situation occurs,
    - means for, if the abnormal situation occurs, computing a center of a steerable beam situated in the identified region,
    - means for, if the abnormal situation occurs, transferring to the satellite component a command in order to apply the steerable beam pointing towards the computed center, the steerable beam using at most all the resources that may be re-allocated,
    - means for, if the abnormal situation occurs, transferring to the component of the integrated satellite-terrestrial network which was using, before the abnormal situation occurs, the at most all resources that may be re-allocated a command to stop using the at most all resources that may be re-allocated at least in the area covered by the steerable beam.

12. Computer program which can be directly loadable into a programmable device, comprising instructions or portions of code for implementing the steps of the method according to claims 1 to 8, when said computer program is executed on a programmable device.

**EP 3 062 451 B1**

**Patentansprüche**

1. Verfahren zum neuen Zuteilen von Ressourcen in einem integrierten Satelliten-/terrestrischen Netzwerk, wenn eine anormale Situation in einem durch das integrierte Satelliten-/terrestrische Netzwerk versorgten Gebiet auftritt, wobei das integrierte Satelliten-/terrestrische Netzwerk eine terrestrische zellulare Komponente umfasst, die aus Zellen besteht, eine Satellitenkomponente und eine Netzwerksteuerung, die mit sowohl der terrestrischen Komponente als auch der Satellitenkomponente kommuniziert, wobei die der Satellitenkomponente zugeteilten Ressourcen in mehrere Unterteilbereiche von durch eine Gruppe von durch einen Satelliten der Satellitenkomponente für eine Mehrstrahlübertragung an der terrestrischen Oberfläche erzeugten Strahlen verwendeten Ressourcen aufgeteilt sind, wobei in jedem Strahl unter Verwendung von einem Unterteilbereich von Ressourcen die Zellen in dem Strahl unterschiedliche Ressourcen von dem Unterteilbereich von durch den Strahl verwendeten Ressourcen verwenden, **dadurch gekennzeichnet, dass** die Ressourcen des integrierten Satelliten-/terrestrischen Netzwerks weiterhin Ressourcen umfassen, die neu zugeteilt werden können, wenn eine anormale Situation in dem durch das integrierte Satelliten-/terrestrische Netzwerk versorgten Gebiet auftritt, und dass das Verfahren die durch eine Netzwerksteuerung, die mit sowohl der terrestrischen Komponente als auch der Satellitenkomponente des integrierten Satelliten-/terrestrischen Netzwerks kommunizieren kann, ausgeführten folgenden Schritte umfasst:

   - Überwachen (S500) von Berichten im integrierten Satelliten-/terrestrischen Netzwerk,
   - Prüfen (S501), ob eine anormale Situation auftritt, gemäß dem Inhalt von Berichten durch Prüfen, ob ein erhöhter Verkehrsbedarf auf der terrestrischen zellularen Komponente in einem geographischen Bereich auftritt, und/oder durch Prüfen, ob ein erhöhter Verkehrsbedarf auf der Satellitenkomponente in dem geographischen Bereich auftritt, und/oder durch Prüfen, ob Zellen eines geographischen Bereichs darin fehlschlagen, Berichte bereitzustellen, und/oder durch Prüfen, ob sich ein Interferenzpegel auf Zellen erhöht, die den geographischen Bereich umgeben, und ob eine anormale Situation auftritt:
   - Identifizieren (S502) eines Bereichs, in welchem eine anormale Situation auftritt,
   - Berechnen (S503, S504) eines Zentrums eines richtungsänderbaren Strahls, angeordnet im identifizierten Bereich,
   - Transferieren (S506) eines Befehls zur Satellitenkomponente, um den richtungsänderbaren Strahl, der in Richtung zum berechneten Zentrum zeigt, anzuwenden, wobei der richtungsänderbare Strahl höchstens alle Ressourcen verwendet, die neu zugeteilt werden können,
   - Transferieren zu der Komponente des integrierten Satelliten-/terrestrischen Netzwerks, die, bevor die anormale Situation auftritt, höchstens alle Ressourcen, die neu zugeteilt werden können, verwendeten, eines Befehls, um ein Verwenden von den höchstens allen Ressourcen, die neu zugeteilt werden können, wenigstens in dem durch den richtungsänderbaren Strahl versorgten Gebiet zu stoppen.

2. Verfahren nach Anspruch 1, **dadurch gekennzeichnet, dass** die Komponente des integrierten Satelliten-/terrestrischen Netzwerks, die höchstens alle Ressourcen, die neu zugeteilt werden können, verwendete, die terrestrische zellulare Komponente ist.

3. Verfahren nach Anspruch 2, **dadurch gekennzeichnet, dass** die terrestrische zellulare Komponente höchstens alle Ressourcen, die neu zugeteilt werden können, nur für Anwenderdatenkommunikation verwendete.

4. Verfahren nach einem der Ansprüche 1 bis 3, **dadurch gekennzeichnet, dass** das Verfahren einen weiteren Schritt zum Berechnen einer Größe des richtungsänderbaren Strahls umfasst.

5. Verfahren nach einem der Ansprüche 2 bis 4, **dadurch gekennzeichnet, dass** das Verfahren einen vor dem Transfer der Befehle ausgeführten folgenden Schritt umfasst:

   - Prüfen, für einen variablen Bereich von Ressourcen, die neu zugeteilt werden können, ob im Fall einer Verwendung eines richtungsänderbaren Strahls in wenigstens dem durch den richtungsänderbaren Strahl versorgten Gebiet der Kapazitätsgewinn der Satellitenkomponente höher als der Kapazitätsverlust der terrestrischen zellularen Komponente ist.

6. Verfahren nach Anspruch 5, **dadurch gekennzeichnet, dass** das Prüfen für den variablen Bereich von Ressourcen weiterhin für eine Vielzahl von möglichen Zentren des im identifizierten Bereich angeordneten richtungsänderbaren Strahls durchgeführt wird.

7. Verfahren nach einem der Ansprüche 1 bis 6, **dadurch gekennzeichnet, dass** jede Zelle weiterhin Ressourcen verwendet, die unterschiedlich von den Ressourcen sind, die der Satellitenkomponente zugeteilt sind, und von den Ressourcen, die neu zugeteilt werden können.

8. Verfahren nach einem der Ansprüche 1 bis 7, **dadurch gekennzeichnet, dass** der Befehl, um ein Verwenden von dem höchstens allen Ressourcen, die neu zugeteilt werden können, wenigstens in dem durch den richtungsänderbaren Strahl versorgten Gebiet zu stoppen, ein Befehl ist, um ein Verwenden von den höchstens allen Ressourcen, die neu zugeteilt werden können, wenigstens in dem durch den richtungsänderbaren Strahl versorgten Gebiet und in einem beschränkten Gebiet zu stoppen.

9. Verfahren nach einem der Ansprüche 7 bis 8, **dadurch gekennzeichnet, dass** das Verfahren durch die Netzwerksteuerung ausgeführt wird, die mit sowohl der terrestrischen Komponente als auch mit der Satellitenkomponente kommuniziert.

10. Verfahren nach einem der Ansprüche 1 bis 5, **dadurch gekennzeichnet, dass** das Zentrum des richtungsänderbaren Strahls berechnet wird als:

$$c_{Strahl} = \left( \sum_{i=1}^{N_d} c_i f(u_i) \right) / \sum_{i=1}^{N_d} f(u_i),$$

wobei $c_i$, i=1...$N_d$ komplexe Koordinaten der Zellen sind, die im identifizierten Bereich angeordnet sind, der jeweils $u_i$ angeschlossene mobile Endgeräte hat, $N_d$ die Anzahl der Zellen ist, die im identifizierten Bereich angeordnet sind, und die Funktion $f(u_i) = 1$ oder $f(u_i) = u_i$.

11. Vorrichtung zum neuen Zuteilen von Ressourcen in einem integrierten Satelliten-/terrestrischen Netzwerk, wenn eine anormale Situation in einem durch das integrierte Satelliten-/terrestrische Netzwerk versorgten Gebiet auftritt, wobei das integrierte Satelliten-/terrestrische Netzwerk eine terrestrische zellulare Komponente umfasst, die aus Zellen besteht, eine Satellitenkomponente und eine Netzwerksteuerung, die mit sowohl der terrestrischen Komponente als auch der Satellitenkomponente kommuniziert, wobei die der Satellitenkomponente zugeteilten Ressourcen in mehrere Unterteilbereiche von durch eine Gruppe von durch einen Satelliten der Satellitenkomponente für eine Mehrstrahlübertragung an der terrestrischen Oberfläche erzeugten Strahlen verwendeten Ressourcen aufgeteilt sind, wobei in jedem Strahl unter Verwendung von einem Unterteilbereich von Ressourcen die Zellen in dem Strahl unterschiedliche Ressourcen von dem Unterteilbereich von durch den Strahl verwendeten Ressourcen verwenden, **dadurch gekennzeichnet, dass** die Ressourcen des integrierten Satelliten-/terrestrischen Netzwerks weiterhin Ressourcen umfassen, die neu zugeteilt werden können, wenn eine anormale Situation in dem durch das integrierte Satelliten-/terrestrische Netzwerk versorgten Gebiet auftritt, und dass die Vorrichtung in einer Netzwerksteuerung enthalten ist, die mit sowohl der terrestrischen Komponente als auch der Satellitenkomponente des integrierten Satelliten-/terrestrischen Netzwerks kommunizieren kann, und folgendes umfasst:

- Mittel zum Überwachen von Berichten im integrierten Satelliten-/terrestrischen Netzwerk,
- Mittel zum Prüfen, ob eine anormale Situation auftritt, gemäß dem Inhalt von Berichten durch Prüfen, ob ein erhöhter Verkehrsbedarf auf der terrestrischen zellularen Komponente in einem geographischen Bereich auftritt, und/oder durch Prüfen, ob ein erhöhter Verkehrsbedarf auf der Satellitenkomponente in dem geographischen Bereich auftritt, und/oder durch Prüfen, ob Zellen eines geographischen Bereichs darin fehlschlagen, Berichte bereitzustellen, und/oder durch Prüfen, ob sich ein Interferenzpegel auf Zellen erhöht, die den geographischen Bereich umgeben, und ob eine anormale Situation auftritt:
- wenn die anormale Situation auftritt, Mittel zum Identifizieren eines Bereichs, in welchem eine anormale Situation auftritt,
- wenn die anormale Situation auftritt, Mittel zum Berechnen eines Zentrums eines richtungsänderbaren Strahls, angeordnet im identifizierten Bereich,
- wenn die anormale Situation auftritt, Mittel zum Transferieren eines Befehls zur Satellitenkomponente, um den richtungsänderbaren Strahl, der in Richtung zum berechneten Zentrum zeigt, anzuwenden, wobei der richtungsänderbare Strahl höchstens alle Ressourcen verwendet, die neu zugeteilt werden können,
- wenn die anormale Situation auftritt, Mittel zum Transferieren zu der Komponente des integrierten Satelliten-/terrestrischen Netzwerks, die, bevor die anormale Situation auftritt, höchstens alle Ressourcen, die neu zugeteilt werden können, verwendeten, eines Befehls, um ein Verwenden von den höchstens allen Ressourcen, die neu zugeteilt werden können, wenigstens in dem durch den richtungsänderbaren Strahl versorgten Gebiet zu stoppen.

**12.** Computerprogramm, das direkt in eine programmierbare Vorrichtung ladbar sein kann, umfassend Anweisungen oder Teilbereiche eines Codes zum Implementieren der Schritte des Verfahrens nach den Ansprüchen 1 bis 8, wenn das Computerprogramm auf einer programmierbaren Vorrichtung ausgeführt wird.

**Revendications**

**1.** Procédé de réallocation des ressources dans un réseau satellite-terrestre intégré si une situation anormale se produit dans une zone couverte par le réseau satellite-terrestre intégré, le réseau satellite-terrestre intégré comprenant une composante cellulaire terrestre composée de cellules, une composante satellite et un contrôleur de réseau communiquant avec les composantes terrestres et satellites, les ressources allouées à la composante satellite étant divisées en plusieurs sous-portions de ressources utilisées par un ensemble de faisceaux générés par un satellite de la composante satellite pour une transmission multifaisceaux à la surface terrestre, dans laquelle dans chaque faisceau utilisant une sous-portion de ressources, les cellules dans ledit faisceau utilisent des ressources différentes de la sous-portion de ressources utilisées par ledit faisceau, **caractérisé en ce que** les ressources du réseau satellite-terrestre intégré comportent en outre des ressources qui peuvent être réaffectées lorsqu'une situation anormale se produit dans la zone couverte par le réseau satellite-terrestre intégré et **en ce que** le procédé comporte les étapes, exécutées par un contrôleur de réseau capable de communiquer avec les composantes terrestres et satellites du réseau satellite-satellite intégré, de :

- surveillance (S500) de rapports du réseau satellite-terrestre intégré,
- vérification (S501) si une situation anormale se produit selon le contenu des rapports en vérifiant si un accroissement de demande de trafic sur la composante cellulaire terrestre se produit dans une région géographique et/ou en vérifiant si un accroissement de demande de trafic sur la composante satellite se produit dans la région géographique et/ou en vérifiant si les cellules d'une région géographique ne fournissent pas de rapports et/ou en vérifiant si le niveau d'interférence augmente sur les cellules entourant la région géographique et si une situation anormale se produit :
- identification (S502) d'une région dans laquelle la situation anormale se produit,
- calcul (S503, S504) d'un centre d'un faisceau orientable situé dans la région identifiée,
- transfert (S506) à la composante satellite d'une commande pour appliquer le faisceau orientable pointant vers le centre calculé, le faisceau orientable utilisant au maximum toutes les ressources pouvant être réattribuées,
- transfert vers la composante du réseau satellite-terrestre intégré qui utilisait, avant que la situation anormale ne se produise, au maximum toutes les ressources pouvant être réattribuées qui peuvent être réaffectées d'une commande pour cesser d'utiliser au maximum toutes les ressources qui peuvent être réaffectées au moins dans la zone couverte par le faisceau orientable.

**2.** Procédé selon la revendication 1, **caractérisé en ce que** la composante du réseau satellite-terrestre intégré qui utilise au maximum toutes les ressources susceptibles d'être réattribuées est la composante cellulaire terrestre.

**3.** Procédé selon la revendication 2, **caractérisé en ce que** la composante cellulaire terrestre utilise au maximum toutes les ressources qui peuvent être réaffectées uniquement pour la communication de données utilisateur.

**4.** Procédé selon l'une quelconque des revendications 1 à 3, **caractérisé en ce que** le procédé comporte en outre une étape de calcul d'une taille du faisceau orientable.

**5.** Procédé selon l'une quelconque des revendications 2 à 4, **caractérisé en ce que** le procédé comporte en outre une étape exécutée préalablement au transfert des commandes de :

- vérification, pour une plage variable de ressources pouvant être réaffectées, si, dans le cas d'un déploiement de faisceau orientable, le gain de capacité de la composante satellite est supérieur à la perte de capacité de la composante cellulaire terrestre dans au moins la zone couverte par le faisceau orientable.

**6.** Procédé selon la revendication 5, **caractérisé en ce que** la vérification de la plage variable de ressources est en outre effectuée pour une pluralité de centres possibles du faisceau orientable situés dans la région identifiée.

**7.** Procédé selon l'une quelconque des revendications 1 à 6, **caractérisé en ce que** chaque cellule utilise en outre des ressources différentes des ressources allouées à la composante satellite et des ressources pouvant être réaffectées.

8. Procédé selon l'une quelconque des revendications 1 à 7, **caractérisé en ce que** la commande d'arrêt d'utilisation de au maximum toutes les ressources susceptibles d'être réattribuées au moins dans la zone couverte par le faisceau orientable est une commande d'arrêt utilisant les au maximum toutes les ressources qui peuvent être réaffectées au moins dans la zone couverte par le faisceau orientable dans une zone restreinte.

9. Procédé selon l'une quelconque des revendications 7 à 8, **caractérisé en ce que** le procédé est exécuté par le contrôleur de réseau communiquant à la fois avec les composantes terrestres et satellites.

10. Procédé selon l'une quelconque des revendications 1 à 5, **caractérisé en ce que** le centre du faisceau orientable est calculé comme: $c_{beam} = \left( \sum_{i=1}^{N_d} c_i f(u_i) \right) / \sum_{i=1}^{N_d} f(u_i)$, où $c_i$, $i=1...N_d$ sont les coordonnées complexes des cellules situées dans la région identifiée ayant chaque $u_i$ terminaux mobiles attachés, $N_d$ est le nombre de cellules situées dans la région identifiée, et la fonction $f(u_i)=1$ ou $f(u_i)=u_i$.

11. Dispositif de réallocation des ressources dans un réseau satellite-terrestre intégré si une situation anormale se produit dans une zone couverte par le réseau satellite-terrestre intégré, le réseau satellite-terrestre intégré comprenant une composante cellulaire terrestre composée de cellules, une composante satellite et un contrôleur de réseau communiquant avec les composantes terrestres et satellites, les ressources allouées à la composante satellite étant divisées en plusieurs sous-portions de ressources utilisées par un ensemble de faisceaux générés par un satellite de la composante satellite pour une transmission multifaisceaux à la surface terrestre, dans laquelle dans chaque faisceau utilisant une sous-portion de ressources, les cellules dans ledit faisceau utilisent des ressources différentes de la sous-portion de ressources utilisées par ledit faisceau, **caractérisé en ce que** les ressources du réseau satellite-terrestre intégré comportent en outre des ressources qui peuvent être réaffectées lorsqu'une situation anormale se produit dans la zone couverte par le réseau satellite-terrestre intégré et **en ce que** le dispositif est compris dans un contrôleur de réseau capable de communiquer avec les composantes terrestres et satellites du réseau satellite-satellite intégré, et comporte :

   - des moyens de surveillance de rapports du réseau satellite-terrestre intégré,
   - des moyens de vérification si une situation anormale se produit selon le contenu des rapports en vérifiant si un accroissement de demande de trafic sur la composante cellulaire terrestre se produit dans une région géographique et/ou en vérifiant si un accroissement de demande de trafic sur la composante satellite se produit dans la région géographique et/ou en vérifiant si les cellules d'une région géographique ne fournissent pas de rapports et/ou en vérifiant si le niveau d'interférence augmente sur les cellules entourant la région géographique et si une situation anormale se produit:
   - des moyens d'identification d'une région dans laquelle la situation anormale se produit,
   - des moyens de calcul d'un centre d'un faisceau orientable situé dans la région identifiée,
   - des moyens de transfert à la composante satellite d'une commande pour appliquer le faisceau orientable pointant vers le centre calculé, le faisceau orientable utilisant au maximum toutes les ressources pouvant être réattribuées,
   - des moyens de transfert vers la composante du réseau satellite-terrestre intégré qui utilisait, avant que la situation anormale ne se produise, au maximum toutes les ressources pouvant être réattribuées qui peuvent être réaffectées d'une commande pour cesser d'utiliser au maximum toutes les ressources qui peuvent être réaffectées au moins dans la zone couverte par le faisceau orientable.

12. Programme d'ordinateur pouvant être directement chargeable dans un dispositif programmable, comprenant des instructions ou des portions de code pour la mise en oeuvre des étapes du procédé selon les revendications 1 à 8, lorsque ledit programme d'ordinateur est exécuté sur un dispositif programmable.

Sat

Gw

NC

Core Network

MT

BS

## Fig. 1

| Bsat1 | Ter1 | | |
|---|---|---|---|
| Ter2 | Bsat2 | Ter2 | |
| Ter3 | | Bsat3 | Ter3 |
| Ter4 | | | Bsat4 |

## Fig. 2

NC

300 — Processor

303 — RAM

302 — ROM

Network I/F — 305

301

# Fig. 3

| Bsat1 | Ter1 | | | ReBsat1 |
|---|---|---|---|---|
| Ter2 | Bsat2 | Ter2 | | ReBsat2 |
| Ter3 | | Bsat3 | Ter3 | ReBsat3 |
| Ter4 | | | Bsat4 | Ter4 | ReBsat4 |

$B_{beam}$  $B_{TO}$  $B_r$

$B_{sat}$

$B_{tot}$

# Fig. 4

Monitor Network —S500

Abnormal situation? —S501

Determine zone —S502

Determine centre of the beam —S503

Determine size of the beam —S504

Specific measures? —S505

Apply —S506

Return to normal situation —S507

Fig. 5

**EP 3 062 451 B1**

**Patent documents cited in the description**

- US 2002090942 A

- GB 2354673 A